# FASCICULE DE BREVET EUROPEEN

(11) **EP 3 107 044 B1**
(45) Date de publication et mention de la délivrance du brevet: **16.05.2018**
(21) Numéro de dépôt: 16173848.9
(22) Date de dépôt: 10.06.2016
(51) Int. Cl.: G06K 19/077, G06K 19/07, G01K 5/48, H01Q 1/38, G01K 1/02, G06K 7/10, H01Q 1/22, H01Q 1/48

(54) **RADIO-ETIQUETTE**
FUNKETIKETT
RADIO TAG

(30) Priorité: 15.06.2015 FR 1555450
(43) Date de publication de la demande: 21.12.2016
(73) Titulaire: Commissariat à l'énergie atomique et aux énergies alternatives, 75015 Paris (FR)
(72) Inventeur: VIALA, Bernard, 38360 Sassenage (FR); ALARCON RAMOS, Juvenal, 38000 Grenoble (FR)
(74) Mandataire: Colombo, Michel

(56) Documents cités:
- WO-A1-2012/131143
- WO-A2-2004/015624
- KR-B1- 101 325 159
- BHATTACHARYYA R ET AL: "RFID tag antenna based temperature sensing in the frequency domain", RFID (RFID), 2011 IEEE INTERNATIONAL CONFERENCE ON, IEEE, 12 avril 2011 (2011-04-12), pages 70-77, XP031864531, DOI: 10.1109/RFID.2011.5764639 ISBN: 978-1-4244-9607-5

## Description

L'invention concerne une radio-étiquette apte à indiquer à un lecteur, par l'intermédiaire d'une liaison sans-fil, qu'une grandeur physique a franchi un seuil prédéterminé, cette grandeur physique étant choisie dans le groupe composé de la température de la radio-étiquette et du champ magnétique dans lequel est plongé la radio-étiquette. L'invention concerne également un ensemble comportant cette radio-étiquette et un lecteur.

Les radio-étiquettes sont également connues sous le terme de « étiquette RFID (Radio Frequency IDentification)» ou sous le terme anglais de « Tag RFID ».

Des radio-étiquettes connues comportent :
- un substrat électriquement isolant,
- une antenne pour établir la liaison sans-fil avec le lecteur, cette antenne étant entièrement déposée et fixée sans aucun degré de liberté sur le substrat isolant,
- un plan de masse flottant en matériau électriquement conducteur et électriquement isolé de l'antenne, ce plan de masse étant déplaçable par rapport à l'antenne entre une première position dans laquelle l'impédance de l'antenne est égale à une première valeur et une seconde position dans laquelle l'impédance de l'antenne est égale à une seconde valeur différente de la première valeur, et
- un actionneur réalisé dans un matériau transducteur apte à transformer une variation de la grandeur physique en un déplacement mécanique du plan de masse entre ses première et seconde positions lorsque cette variation conduit la grandeur physique à franchir le seuil prédéterminé pour indiquer au lecteur cet événement, le matériau transducteur étant choisi dans un groupe composé d'un matériau à mémoire de forme thermique, d'un matériau magnétostrictif et d'un matériau à mémoire de forme magnétique.

Le plan de masse est typiquement réalisé en métal. Il est le plus souvent isolé électriquement de tout potentiel électrique de référence. Par exemple, généralement, il n'est pas raccordé à la terre. Le plan de masse flottant agit sur l'impédance de l'antenne et, principalement, sur son inductance. Par conséquent, indirectement, le plan de masse agit sur le coefficient de réflexion propre de l'antenne. Pour cette raison, ce plan de masse est aussi couramment désigné sous le terme anglais de « reflective layer » et donc, parfois, sous le terme de « réflecteur » en français. Dans cette description, le terme « réflecteur» pourra donc être utilisé pour désigner le plan de masse.

Par exemple, une telle radio-étiquette est divulguée dans l'article suivant : R. Bhattacharyya et al : « RFID Tag Antenna Based Temperature Sensing in the Frequency Domain », RFID, 2011, IEEE Conférence On RFID. Par la suite, cet article est appelé article A1 dans cette description.

Dans l'article A1, le plan de masse est une plaque en matériau électriquement conducteur et l'actionneur est réalisé dans un polymère à mémoire de forme thermique. La plaque est fixée sur l'actionneur de manière à être déplacé par cet actionneur entre les positions éloignée et rapprochée. Dans la suite de la description, sauf indication contraire, par « matériau à mémoire de forme », on désigne un matériau à mémoire de forme thermique, c'est-à-dire un matériau qui se déforme brusquement lorsque sa température franchit un seuil S_{T} de température. Ce seuil de température est aussi appelé « température de transition » du matériau. Par simplification, on néglige ici les phénomènes d'hystérésis de sorte que l'on considère que la température de transition est la même lorsque l'on chauffe et lorsque l'on refroidit le matériau à mémoire de forme.

Lorsque la température est inférieure au seuil S_{T}, l'actionneur maintient la plaque dans la position éloignée de l'antenne. Dans la position éloignée, la plaque est à environ 1 cm sous l'antenne. Si la température de la radio-étiquette dépasse le seuil S_{T}, alors l'actionneur se déforme et déplace la plaque jusqu'à la position rapprochée. Dans sa position rapprochée, la plaque est à environ 3 mm sous l'antenne. La présence ou non de la plaque à proximité de l'antenne modifie son impédance. La modification de l'impédance de l'antenne est détectable par le lecteur. Ainsi, le lecteur peut savoir si la température de la radio-étiquette a dépassé ou non le seuil S_{T}. La radio-étiquette de l'article A1 présente l'avantage de fonctionner exactement de la même façon quelle que soit son orientation dans l'espace. En particulier, le fonctionnement de l'antenne de l'article A1 ne dépend pas de son orientation par rapport au champ de gravité.

De telles radio-étiquettes capables d'indiquer si un seuil de température a été dépassé ont de nombreuses applications. Par exemple, elles peuvent être utilisées, lorsqu'elles sont fixées sur un produit congelé, pour vérifier que la chaîne du froid a été respectée et que la température du produit congelé et donc celle de la radio-étiquette n'a jamais dépassée le seuil S_{T}. Bien sûr, le domaine d'application de telles radio-étiquettes n'est pas limité aux produits congelés. Elles peuvent être utilisées sur n'importe quel objet dont la température doit être surveillée à un moment ou à un autre.

Dans l'article A1, l'antenne est simple à fabriquer car elle est entièrement déposée sur le substrat isolant. De nombreux procédés de fabrication sont alors utilisables pour la fabriquer simplement. Par exemple, l'antenne peut être fabriquée par dépôt d'une couche conductrice sur le substrat puis gravure de cette couche conductrice. L'antenne peut aussi être réalisée par projection localisée sur le substrat d'une encre conductrice. Par contre, la réalisation du plan de masse et de l'actionneur complexifie sérieusement la fabrication de cette radio-étiquette. En effet, pour fabriquer la radio-étiquette il faut assembler, dans un même boîtier, une plaque et un actionneur.

De l'état de la technique est également connu de :
- S. Caizzone et al. : « Multi-chip RFID Antenna Integrating Shape-Memory Alloys for Detection of Thermal Thresholds », IEEE 2011.
- la demande JP2009162700 de la société HITACHI®.

L'état de la technique ci-dessus concerne également des radio-étiquettes capables de détecter le franchissement d'un seuil S_{T} de température. Toutefois, dans cet état de la technique, la variation de l'impédance de l'antenne est obtenue en modifiant sa longueur et non pas en déplaçant un plan de masse. A cause de cela, l'antenne ne peut pas être entièrement déposée sur un substrat et doit comporter des parties mobiles. Elle ne peut donc pas être fabriquée par des procédés de fabrication aussi simples que ceux utilisables pour fabriquer l'antenne de l'article A1.

Enfin, de l'état de la technique est également connu de :
- WO2004015624A2,
- KR101325159B1,
- WO2012131143A1.

L'invention vise donc à proposer une radio-étiquette qui conserve les avantages de la radio-étiquette de l'article A1 tout en étant encore plus simple à fabriquer. Elle a donc pour objet une radio-étiquette conforme à la revendication 1.

La radio-étiquette ci-dessus conserve la simplicité de fabrication de l'antenne de l'article A1 puisque son antenne est entièrement déposée sur le substrat et ne comporte pas de partie mobile. En particulier, l'antenne peut être réalisée par collage d'un fil sur le substrat, par photolithographie et gravure ou par impression, par exemple à l'aide d'une imprimante à jet d'encre. De plus, dans la radio-étiquette revendiquée, une même lame en matériau transducteur électriquement conducteur remplit à la fois les rôles de plan de masse et d'actionneur. Cela simplifie la fabrication de l'antenne revendiquée puisqu'une seule pièce au lieu de deux est utilisée pour remplir les mêmes fonctions. De plus, le problème de fixation d'une plaque en matériau électriquement conducteur sur un polymère à mémoire de forme est éliminé.

Ainsi, l'antenne revendiquée permet de détecter le franchissement d'un seuil de température ou de champ magnétique tout en restant simple à fabriquer.

Les modes de réalisation de cette radio-étiquette peuvent comporter une ou plusieurs des caractéristiques des revendications dépendantes.

Ces modes de réalisation de la radio-étiquette présentent en outre les avantages suivants :
- L'utilisation d'une lame dont une partie fixe est ancrée au substrat simplifie encore plus la fabrication de la radio-étiquette.
- L'absence de puce électronique dans la radio-étiquette permet de simplifier encore plus sa fabrication.
- L'utilisation d'un matériau à mémoire de forme en tant que matériau transducteur permet de détecter un franchissement d'un seuil de température.
- Utiliser un matériau transducteur dont la déformation est irréversible permet en plus de mémoriser le franchissement du seuil prédéterminé même en absence de lecteur.
- Le fait que l'amplitude du débattement maximal de l'antenne entre ses positions éloignée et rapprochée soit au moins supérieure à 1 mm, facilite l'identification de ces deux positions.

L'invention a également pour objet un ensemble comportant :
- la radio-étiquette revendiquée, et
- le lecteur apte à émettre une onde électromagnétique à une fréquence d'interrogation pour lire la radio-étiquette.

Dans l'ensemble ci-dessus, le franchissement du seuil prédéterminé est codé par la fréquence de l'onde électromagnétique utilisée pour communiquer avec le lecteur. Ce moyen de coder l'information selon laquelle le seuil prédéterminé a été franchi ou non est indépendant de la distance qui sépare le lecteur de la radio-étiquette.

L'invention sera mieux comprise à la lecture de la description qui va suivre, donnée uniquement à titre d'exemple non limitatif tout en se référant aux dessins sur lesquels :
- la figure 1 est une illustration schématique d'un ensemble utilisé pour détecter le franchissement d'un seuil de température ;
- la figure 2 est une illustration en vue de dessus d'un premier mode de réalisation d'une radio-étiquette de l'ensemble de la figure 1 ;
- les figures 3 et 4 sont des illustrations en coupe verticale de la radio-étiquette de la figure 2 dans deux positions différentes;
- la figure 5 est une illustration en vue de dessus d'une lame de la radio-étiquette de la figure 2;
- la figure 6 est une illustration schématique, en vue de dessus, d'un deuxième mode de réalisation d'une radio-étiquette pour l'ensemble de la figure 1 ;
- les figures 7 à 11 sont des illustrations schématiques, en coupe verticale, respectivement, de troisième, quatrième, cinquième, sixième et septième modes de réalisation d'une radio-étiquette pour l'ensemble de la figure 1.

Dans ces figures, les mêmes références sont utilisées pour désigner les mêmes éléments. Dans la suite de cette description, les caractéristiques et fonctions bien connues de l'homme du métier ne sont pas décrites en détail.

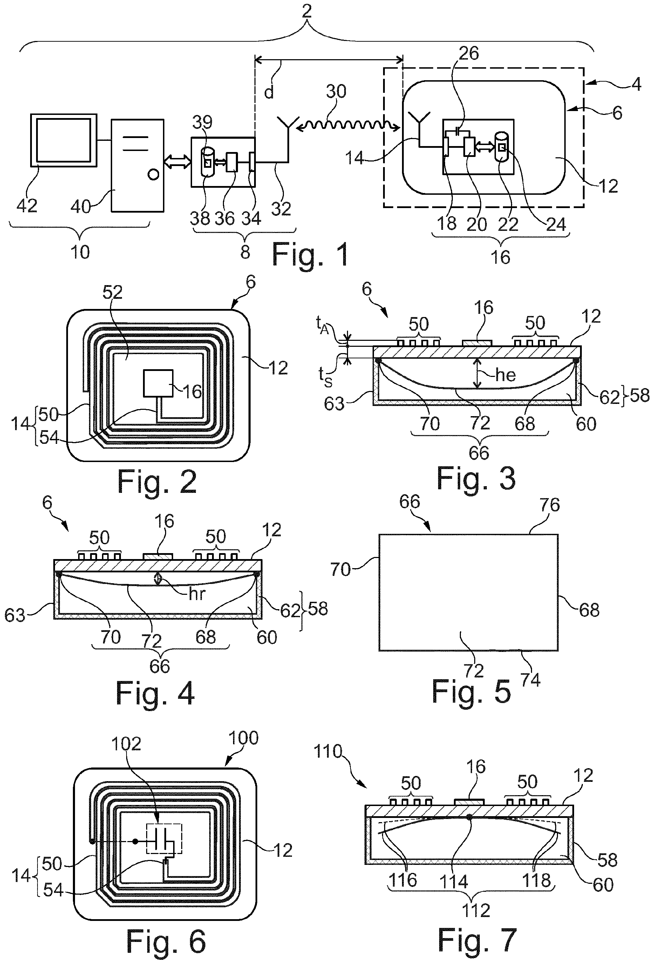

La figure 1 représente un ensemble 2 pour détecter le franchissement d'un seuil prédéterminé S_{T} par une grandeur physique choisie dans le groupe composé d'une température et d'un champ magnétique. Dans le cas particulier décrit ici, l'ensemble 2 est utilisé pour détecter une variation de température d'un objet 4. L'objet 4 est par exemple un emballage, un colis, un être vivant ou tout autre objet sur lequel on peut attacher ou fixer une radio-étiquette.

A cet effet, l'ensemble 2 comporte :
- une radio-étiquette 6 solidaire de l'objet 4,
- un lecteur 8 de la radio-étiquette 6, et
- un appareil 10 de traitement des informations lues par le lecteur 8.

La radio-étiquette 6 est fixée, par exemple, sans aucun degré de liberté, sur l'objet 4. Typiquement, elle est collée sur l'objet 4. Elle peut aussi être intégrée à l'intérieur de l'objet 4 lors de sa fabrication. Il est aussi possible de fixer cette radio-étiquette sur l'objet 4 par l'intermédiaire d'une sangle ou d'un collier. Il est également possible que la radio-étiquette soit fixée sur l'objet 4 avec un degré de liberté lui permettant de se déplacer. Par exemple, seule une extrémité ou un bord de la radio-étiquette est fixé sur l'objet 4.

La radio-étiquette 6 comprend :
- un substrat 12 présentant une face supérieure tournée vers le haut,
- une antenne 14 entièrement déposée et fixée sans aucun degré de liberté sur cette face supérieure du substrat 12, et
- une puce électronique 16 déposée et fixée sans aucun degré de liberté directement sur le substrat 12.

Dans ce mode de réalisation, la face supérieure est plane et horizontale. Le substrat 12 est réalisé dans un matériau électriquement isolant. Par « matériau électriquement isolant », on désigne ici un matériau dont la résistivité à 20°C est supérieure à 10⁶ Ω.m et, de préférence, supérieure à 10¹⁰ Ω.m. De plus, le substrat 12 est réalisé dans un matériau perméable aux ondes électromagnétiques émises par l'antenne 14. Par exemple, le substrat 12 est un polymère tel que du polyéthylène naphtalène (PEN), polytéréphtalate d'éthylène (PET) ou plexiglas dont l'épaisseur est comprise entre 200 µm et 2 mm. Le substrat 12 peut aussi être réalisé dans d'autre matériau non-magnétique tel que du papier ou du carton.

Sur la figure 1, l'antenne 14 est représentée de façon schématique. Des exemples de réalisation possibles sont décrits plus en détail en référence aux figures suivantes. L'antenne 14 permet de recevoir et d'émettre une onde électromagnétique. Dans le cas présent, elle est conçue pour réfléchir, en général une partie seulement, d'une onde électromagnétique émise par le lecteur 8. Typiquement, l'antenne 14 est constituée d'une piste électrique en matériau électriquement conducteur déposée directement sur la face supérieure du substrat 12. Par « matériau électriquement conducteur », on désigne ici un matériau dont la résistivité à 20°C est inférieure à 1 Ω.m et, de préférence, inférieure à 10⁻³ ou 10⁻⁵ Ω.m. Toute l'antenne 14 est fixée sans aucun degré de liberté sur la face supérieure du substrat 12.

De nombreux procédés sont possibles pour réaliser l'antenne 14 sur la face supérieure du substrat 12. Par exemple, l'antenne 14 est obtenue par collage d'un fil conducteur ou encore par dépôt d'une couche en matériau électriquement conducteur sur cette face supérieure puis par gravure de cette couche. L'antenne 14 peut également être obtenue par projection localisée d'une encre conductrice directement sur la face supérieure du substrat 12.

La puce électronique 16 comporte :
- un émetteur-récepteur 18 électriquement raccordé à l'antenne 14,
- un calculateur électronique 20 apte à exécuter des instructions enregistrées dans une mémoire pour traiter et émettre des informations, et
- une mémoire non volatile 22 comportant, par exemple, les instructions exécutées par le calculateur 20 et des données telles qu'un identifiant unique 24.

L'identifiant 24 permet d'identifier de façon unique cette radio-étiquette 6 parmi l'ensemble des autres radio-étiquettes susceptibles d'être lues par lecteur 8.

L'émetteur-récepteur 18 transforme au moins une partie de l'onde électromagnétique captée par l'antenne 14 en énergie électrique stockée, par exemple, dans un condensateur 26. Le condensateur 26 est intégré à l'intérieur de la puce 16. L'énergie électrique stockée dans ce condensateur 26 est ensuite utilisée, lorsqu'elle dépasse un seuil prédéterminé, pour alimenter le calculateur 20. L'émetteur-récepteur 18 démodule également l'onde électromagnétique reçue pour transformer les données codées dans cette onde électromagnétique en données numériques transmises au calculateur 20. La modulation des données transmises à la radio-étiquette 6 est par exemple une modulation d'amplitude ou une modulation de phase. Enfin, l'émetteur-récepteur 18 est aussi capable d'émettre vers le lecteur 8 des données qui lui sont transmises sous forme numérique par le calculateur 20. Par exemple, pour cela, l'émetteur-récepteur 18 modifie l'impédance d'entrée de la puce 16 en fonction des bits d'information à transmettre. La modification de l'impédance d'entrée de la puce 16 se traduit par une modification du coefficient de réflexion de l'antenne 14. La valeur de l'impédance d'entrée de la puce 16 est, par exemple, modifiée en modifiant la valeur d'une charge résistive connectée entre des bornes de l'antenne 14. Ainsi, selon la valeur du bit ou du groupe de bits à transmettre, l'amplitude de l'onde électromagnétique réfléchie par l'antenne 14 est modifiée. Cette modification du rapport entre l'amplitude de l'onde électromagnétique émise par le lecteur 8 et l'amplitude de l'onde électromagnétique réfléchie par l'antenne 14 est détectée par le lecteur 8. A partir de cette différence d'amplitudes, le lecteur en extrait la valeur du bit ou du groupe de bits transmis par la radio-étiquette. Typiquement, la partie de l'onde électromagnétique qui n'est pas réfléchie par l'antenne 14 est utilisée par l'émetteur-récepteur 18 pour charger le condensateur 26. Ce protocole de communication entre la radio-étiquette 6 et le lecteur 8 est connu sous le terme de « rétro-modulation » ou « Backscattering » en anglais. Il permet au lecteur 8 :
- de communiquer avec la radio-étiquette 6 par l'intermédiaire d'une liaison sans fil 30, et en même temps,
- d'alimenter la radio-étiquette 6.

Avec ce protocole, la liaison 30 peut être établie avec une radio-étiquette située à une distance d du lecteur. Typiquement, cette distance d est supérieure à 2 cm, 10 cm, 1 m ou à 10 m. Généralement, cette distance d est également inférieure à 50 m ou 30 m.

La fréquence fᵣ de l'onde électromagnétique utilisée pour établir la liaison 30 est souvent choisie dans le groupe composé des fréquences suivantes :
- la plage des fréquences comprises entre 860 MHz et 960 MHz pour les radio-étiquettes UHF (Ultra High Frequency),
- la fréquence 13,56 MHz, et
- la fréquence 125 kHz.

Par exemple, la radio-étiquette 6 travaille dans la plage de fréquences comprise entre 860 MHz et 960 MHz.

La radio-étiquette 6 est une radio-étiquette passive, c'est-à-dire qu'elle est dépourvue de source d'énergie électrique embarquée dans la radio-étiquette. Autrement dit, la radio-étiquette 6 est uniquement alimentée à partir de l'énergie captée par l'antenne 14.

Le lecteur 8 est capable d'établir la liaison 30 avec la radio-étiquette 6 et donc de lire cette radio-étiquette 6. A cet effet, le lecteur comporte :
- une antenne 32,
- un émetteur-récepteur radio 34 directement raccordé à l'antenne 32,
- un calculateur électronique 36 programmable apte à exécuter des instructions enregistrées dans une mémoire, et
- une mémoire 38.

La mémoire 38 contient les instructions nécessaires pour que le lecteur 8 soit capable de lire la radio-étiquette 6 et, en particulier, soit capable de détecter que la température de la radio-étiquette 6 a dépassé le seuil ST.

Le lecteur 8 est par exemple identique à celui décrit dans l'article A1. Ainsi, seuls les détails nécessaires à la compréhension de l'invention sont donnés ici. Le lecteur 8 est capable d'ajuster automatiquement la fréquence fᵣ de l'onde électromagnétique utilisée pour établir la liaison 30. Plus précisément, le lecteur 8 est capable de sélectionner automatiquement la fréquence fᵣ pour laquelle le taux τ de transfert d'énergie entre le lecteur 8 et la radio-étiquette 6 est supérieur à une limite prédéterminée α. Par exemple, la limite α est supérieure ou égale à 0,8 ou 0,9. Ce taux τ est défini au chapitre III de l'article A1. Ainsi, sa définition n'est pas reprise ici. On rappellera simplement que ce taux τ est compris entre 0 et 1 et que pour une onde électromagnétique reçue par la radio-étiquette, plus il est proche de 1, plus la quantité d'énergie électrique qui peut être récupérée par la radio-étiquette à partir de cette onde électromagnétique est importante. Ce taux τ dépend de l'impédance d'entrée de la puce 16 et de l'impédance de l'antenne 14. Par exemple, ce taux τ est défini par la relation suivante : τ = 4RₐR_{c}/ |Zₐ + Z_{c}|², où :
- Rₐ et R_{c} sont les résistances, respectivement, de l'antenne 14 et de l'impédance d'entrée de la puce 16,
- Zₐ et Z_{c} sont les impédances, respectivement, de l'antenne 14 et de l'impédance d'entrée de la puce 16.

Lorsque le taux τ est supérieur à la limite α, le lecteur 8 peut lire une radio-étiquette plus éloignée du lecteur ou, pour une distance donnée, lire cette radio-étiquette avec une onde électromagnétique moins puissante.

Ici, comme dans l'article A1, pour indiquer au lecteur 8 que la température de la radio-étiquette a dépassé le seuil S_{T}, l'impédance de l'antenne 14 est modifiée. Cela se traduit par une modification de la plage de fréquences où le taux τ est supérieur à la limite α. Ici, la plage de fréquences pour laquelle le taux τ est supérieur à la limite α, quand la température de la radio-étiquette 6 est inférieure au seuil S_{T}, est notée [f_{CL}; f_{CH}]. La plage de fréquence pour laquelle le taux τ est supérieur à la limite a, quand la température de la radio-étiquette est supérieure au seuil S_{T}, est notée [f_{HL} ; f_{HH}]. De préférence, lorsque la température de la radio-étiquette 6 est inférieure au seuil S_{T}, en dehors de la plage [f_{CL} ; F_{CH}], le taux τ décroit très rapidement pour être nul ou presque nul. De même, lorsque la température de la radio-étiquette est supérieure au seuil S_{T}, en dehors de la plage [f_{HL}; f_{HH}], le taux τ décroit très rapidement pour également être presque nul en dehors de cette plage. Ici, comme cela est décrit plus en détail plus loin, la modification de l'impédance de l'antenne 14 provoquée par le franchissement du seuil S_{T} est suffisamment importante pour qu'il n'existe pas de fréquence commune entre les plages [f_{CL}; f_{CH}] et [f_{HL} ; f_{HH}]. Ainsi, si la fréquence choisie automatiquement par le lecteur 8 pour lire la radio-étiquette 6 est comprise dans la plage [f_{CL}; f_{CH}], alors, le lecteur 8 en déduit automatiquement que la température de la radio-étiquette est restée inférieure au seuil S_{T}. A l'inverse, si la fréquence automatiquement choisie par le lecteur 8 pour lire la radio-étiquette 6 est comprise dans la plage [f_{HL} ; f_{HH]}, alors le lecteur 8 en déduit que la température de la radio-étiquette 6 a dépassé le seuil S_{T}.

Pour cela, le lecteur 8 comporte dans sa mémoire une table 39 qui associe la plage [f_{CL} ; f_{CH}] à une indication t_{C} codant le fait que la température de la radio-étiquette 6 est inférieure au seuil S_{T}. Cette table 39 associe également la plage [f_{HL} ; f_{HH}] à une indication t_{H} qui code le fait que la température de la radio-étiquette 6 a dépassé le seuil S_{T}.

On remarquera que dans ce mode de réalisation, bien que la radio-étiquette 6 comporte une seule puce 16 et une seule antenne 14, le lecteur 8 est capable de lire cette puce aussi bien dans le cas où sa température est inférieure que dans le cas où sa température est supérieure au seuil S_{T}. Ainsi, quelle que soit la température de la radio-étiquette 6, le lecteur 8 peut lire son identifiant 24.

Le lecteur 8 est raccordé à l'appareil 10 pour lui transmettre les données lues dans la radio-étiquette 6. Par exemple, le lecteur 8 transmet à l'appareil 10 l'identifiant 24 lu dans la radio-étiquette 6 ainsi que l'indication t_{C} ou t_{H} déduite de la fréquence fᵣ utilisée pour lire la radio-étiquette 6.

Par exemple, l'appareil 10 est équipé d'une unité centrale 40 et d'un écran 42 pour afficher sur cet écran de façon directement lisible et compréhensible par un être humain les données lues dans la radio-étiquette 6.

La radio-étiquette 6 comprend une lame 66 (figures 3 et 4) qui modifie l'inductance de l'antenne 14 en réponse au franchissement du seuil S_{T} par la température de cette radio-étiquette. Pour cela, dans ce mode de réalisation, cette lame 66 se déforme en flexion entre une position éloignée, représentée sur la figure 3, et une position rapprochée représentée sur la figure 4. Dans ce mode de réalisation, la déformation de la lame entre ses positions éloignée et rapprochée est réversible. Ainsi, si la température de la radio-étiquette 6 redescend en-dessous du seuil S_{T,} la lame revient dans sa position éloignée.

La figure 2 représente plus en détail l'antenne 14. L'antenne 14 présente une inductance propre typiquement supérieure à 0,5 µH et, de préférence, supérieure à 1 µH quelle que soit la position de la lame. A cet effet, ici, l'antenne 14 est en forme de spirale. Plus précisément, elle comporte une piste électrique 50 qui s'enroule autour d'un axe central vertical tout en s'éloignant progressivement de cet axe central. La piste 50 fait plusieurs tours complets autour de cet axe central pour former plusieurs spires. Le nombre de spires est fixé pour que l'inductance propre de l'antenne 14 soit supérieure au seuil précédemment cité.

Classiquement, la piste 50 s'enroule autour d'un espace central 52. Cet espace central 52 présente, par exemple, une surface, dans un plan horizontal, supérieure à 1 cm² ou 2 cm² et généralement inférieure à 25 cm² ou 10 cm². La puce 16 est fixée sur le substrat 12 à l'intérieur de cet espace central 52. Par ailleurs, le rectangle horizontal de plus petite surface qui contient entièrement la piste 50 a, par exemple, une surface inférieure à 30 cm² ou 25 cm² et, de préférence, une surface inférieure à 5 cm² ou 3 cm². Le nombre de spires de l'antenne 14 est souvent supérieur à 2, 4 ou 5.

L'antenne 14 comporte aussi un brin rectiligne 54 directement raccordé, d'un côté, à l'émetteur-récepteur 18 et, de l'autre côté, à l'extrémité intérieure de la piste 50. Ici, ce brin 54 est un prolongement rectiligne de la piste 50.

La largeur de la piste 50, dans une direction horizontale, est généralement comprise entre 100 µm et 2 mm. L'épaisseur t_{A} de la piste 50, dans une direction verticale, est généralement comprise entre 1 µm et 500 µm. Sur la figure 3, on note également ts, l'épaisseur du substrat 12. Ici, l'épaisseur ts est constante et comprise, par exemple, entre 100 µm et 5 mm. La piste 50 et le brin 54 sont par exemple réalisés en cuivre.

La figure 3 représente les éléments situés sous l'antenne 14. La radio-étiquette 6 comporte un boîtier 58 parallélépipédique délimitant une cavité intérieure 60. Plus précisément, le boîtier 58 comporte des parois verticales droite 62 et gauche 63 se terminant par des bords supérieurs délimitant une ouverture qui débouche dans la cavité 60. Ces bords supérieurs sont ici fixés, sans aucun degré de liberté, directement sur une face inférieure du substrat 12, de sorte que le substrat 12 obture complètement cette ouverture. L'ensemble de la piste 50 de l'antenne 14 est ici déposée au-dessus de la cavité 60.

Typiquement, le boîtier 58 est un boîtier rigide, c'est-à-dire au moins aussi rigide que le substrat 12 et, de préférence, plus rigide que le substrat 12.

La lame 66 est entièrement logée à l'intérieur de la cavité 60. La lame 66 est réalisée dans un matériau électriquement conducteur. Dans ce mode de réalisation, cette lame 66 comporte deux parties fixes 68 et 70 directement ancrées, sans aucun degré de liberté, respectivement, aux parois verticales 62 et 63. La lame 66 comporte également une partie mobile 72 qui s'étend entre ses deux parties fixes 68 et 70. Les parties fixes 68 et 70 correspondent à des bords transversaux droit et gauche de la lame 66. La lame 66 est ici incurvée vers le bas, c'est-à-dire vers le fond du boîtier 58. Ainsi, la partie mobile 72 se trouve en dessous, dans la direction verticale, des parties fixes 68 et 70. Dans la position éloignée, la partie mobile 72 est éloignée d'une distance maximale hₑ de la face inférieure du substrat 12. Dans la position rapprochée (figure 4), la partie mobile 72 est éloignée d'une distance maximale hᵣ de la face inférieure du substrat 12. La distance hᵣ est typiquement 1,5 fois ou 2 fois plus petite que la distance hₑ. Par exemple, la distance hₑ est supérieure ou égale à 5 mm ou 1 cm et la distance hᵣ est inférieure ou égale à 2 mm ou 3 mm. Le débattement maximal Aₘₐₓ entre les positions éloignée et rapprochée de la lame 66 est égal à l'écart entre les distances hₑ et hᵣ. Ce débattement maximal est au moins supérieur à 1 mm et, de préférence, supérieur ou égal à 3 mm ou 5 mm ou 7 mm.

Le déplacement de la lame 66 entre ses positions éloignée et rapprochée se traduit par une modification de la distance qui sépare l'antenne 14 de la partie mobile 72. Étant donné que la lame 66 est réalisée dans un matériau électriquement conducteur, cela modifie de façon importante l'inductance de l'antenne 14. Ici, on considère qu'une modification de l'inductance propre de l'antenne 14 est importante lorsque l'inductance varie de plus de 10 % et, de préférence, de plus de 20 % ou 30 % par rapport à la valeur de l'inductance de l'antenne 14 dans la position éloignée de la lame 66. C'est cette modification de l'inductance de l'antenne 14 qui se traduit par l'existence des deux plages distinctes [f_{CL} ; F_{CH}] et [f_{HL} ; f_{HH}].

Dans ce mode de réalisation, le déplacement de la lame 66 entre ses positions éloignée et rapprochée est obtenu en réalisant la lame 66 dans un matériau à la fois transducteur et électriquement conducteur qui transforme la variation de température de la radio-étiquette 6 lorsqu'elle franchit le seuil S_{T} en une brusque déformation mécanique de la lame 66. A cet effet, ici, la lame 66 est uniquement formée d'un seule et même bloc de matériau transducteur. Lorsque la température de la radio-étiquette 6 dépasse le seuil S_{T}, la lame 66 se rétrécit brusquement ce qui la fait passer brusquement de la position éloignée vers la position rapprochée. Pour cela, le matériau transducteur utilisé pour réaliser la lame 66 est un matériau à mémoire de forme. Par matériau à mémoire de forme, on désigne ici un matériau dont le taux d'allongement est supérieur à 1 % ou 2 % en réponse à une variation de température typiquement d'au moins 2°C et, par exemple, de 5°C ou 10 °C ou 20°C. Le taux d'allongement est le rapport ΔL/L entre l'amplitude ΔL de la déformation mesurée le long de l'axe où cette déformation est maximale sur la longueur L de ce matériau mesurée le long du même axe. Cette variation importante de la longueur du matériau à mémoire de forme est obtenue uniquement lorsque sa température de transition est franchie. Ici, le matériau à mémoire de forme est choisi pour que sa température de transition soit égale au seuil S_{T} à plus ou moins 5°C près ou plus ou moins 1°C près. On notera aussi que, typiquement, un matériau à mémoire de forme rétrécit brusquement lorsque sa température dépasse sa température de transition. Autrement dit, il présente un comportement opposé à celui obtenu par une simple dilatation thermique.

Dans ce mode de réalisation, le matériau à mémoire est, typiquement, un alliage à mémoire de forme. Ainsi, la lame 66 remplit à la fois la fonction d'actionneur et la fonction de plan de masse des ondes électromagnétiques émises par l'antenne 14.

Par exemple, le matériau à mémoire de forme utilisé est du Nitinol qui est un alliage de nickel et de titane et dont le module de Young à 25°C est typiquement supérieur à 150 GPa.

La figure 5 représente plus en détail la lame 66. Dans ce mode de réalisation, la lame 66 est rectangulaire et la direction dans laquelle sa déformation est maximale est parallèle au plus grand côté de la lame 66, c'est-à-dire parallèle à des bords longitudinaux 74 et 76. Les bords 74 et 76 ne sont pas directement fixés aux parois verticales du boîtier 58 pour permettre à la lame 66 de se déplacer facilement en flexion entre ses positions éloignée et rapprochée. Les bords transversaux, c'est-à-dire les plus petits côtés de la lame 66, correspondent aux parties fixes 68 et 70.

Les dimensions de la lame 66 sont telles que sa projection orthogonale sur la face inférieure du substrat contient au moins 50% et, de préférence, au moins 70% ou 90% et, de façon encore plus avantageuse 100% de la projection orthogonale de l'antenne 14 sur cette même face. Ainsi, les dimensions minimales de la lame 66 se déduisent des dimensions de l'antenne 14. A l'inverse, il n'est généralement pas nécessaire que les dimensions de la lame 66 soient beaucoup plus grandes que celles de l'antenne 14.

Le fonctionnement de la radio-étiquette 6 se déduit des explications précédemment données.

La figure 6 représente une radio-étiquette 100 susceptible d'être utilisée à la place de la radio-étiquette 6 dans l'ensemble 2. Elle est identique à la radio-étiquette 6 sauf que la puce 16 est remplacée par une simple charge électrique 102 raccordée électriquement entre les deux extrémités de l'antenne 14. Sur la figure 6, la piste en pointillé qui raccorde électriquement une borne de la charge 102 à l'extrémité extérieure de l'antenne 14 indique que cette piste est, par exemple, réalisée sur la face inférieure du substrat 12 opposée à sa face supérieure. Dans ce mode de réalisation, la charge 102 est un condensateur qui forme avec l'antenne 14 un circuit LC résonnant. Le circuit LC ainsi formé résonne à une fréquence de résonance f_{R1} quand la lame 66 est dans sa position éloignée et a une fréquence f_{R2} dans la position rapprochée. La capacité du condensateur 102 et la valeur de l'inductance propre de l'antenne 14 sont ajustées pour que les fréquences f_{R1} et f_{R2} coïncident avec des fréquences que le lecteur 8 est capable d'émettre. Dans ces conditions, lorsque la lame 66 est dans sa position éloignée, le taux τ est maximum pour une onde électromagnétique émise à la fréquence f_{R1}. Par contre, lorsque la lame 66 est dans sa position rapprochée, le taux τ est maximum pour une onde électromagnétique émise à la fréquence f_{R2}.

Le lecteur 8 est donc capable de lire l'information selon laquelle le seuil S_{T} est dépassé ou non de la même manière qu'avec la radio-étiquette 6. Toutefois, dans ce mode de réalisation simplifié, aucune puce électronique n'est utilisée. Par conséquent, l'identifiant 24 de la radio-étiquette n'est pas transmis au lecteur 8.

La figure 7 représente une radio étiquette 110 susceptible d'être utilisée à la place de la radio étiquette 6 dans l'ensemble 2. La radio étiquette 110 est identique à la radio étiquette 6 sauf que la lame 66 est remplacée par une lame 112. La lame 112 comporte une partie fixe centrale 114 fixée sans aucun degré de liberté au centre de la face inférieure du substrat 12. Ici, cette partie fixe 114 est située sous la puce 16. De part et d'autre de cette partie fixe 114 s'étendent deux parties mobiles 116 et 118. Les positions éloignée et rapprochée des parties mobiles 116 et 118 sont représentées, respectivement, en traits pleins et en traits pointillés sur la figure 7. Comme dans le précédent mode de réalisation, lorsque la température de la lame 112 franchit le seuil S_{T}, les parties mobiles 116 et 118 se rapprochent de l'antenne 14. Le reste du fonctionnement de la radio étiquette 110 se déduit du fonctionnement de la radio étiquette 6.

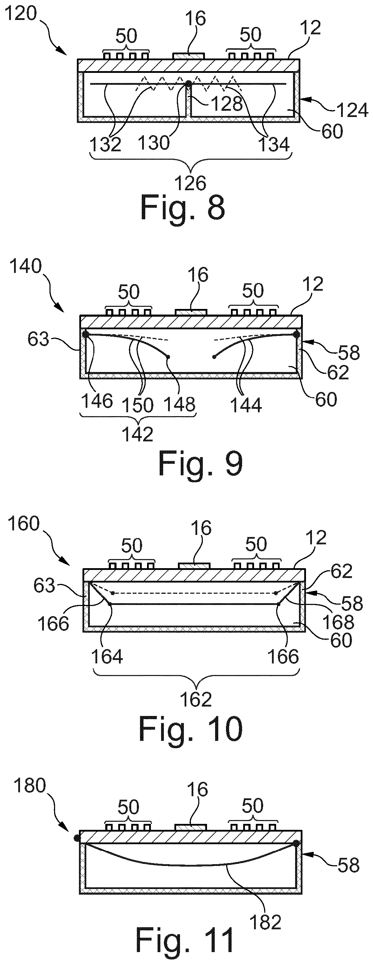

La figure 8 représente une radio étiquette 120 susceptible d'être utilisée à la place de la radio étiquette 6 dans l'ensemble 2. La radio étiquette 120 est identique à la radio étiquette 6 sauf que le boîtier 58 et la lame 66 sont remplacés, respectivement, par un boîtier 124 et une lame 126.

Le boîtier 124 est identique au boîtier 58 sauf qu'il comporte en plus un pied central 128 qui fait saillie depuis le fond de ce boîtier 58 en direction de la puce 16.

La lame 126 est identique à la lame 66 sauf qu'elle comporte :
- une partie centrale fixée sans aucun degré de liberté sur l'extrémité supérieure du pied 128, et
- deux parties mobiles 132 et 134 situées de part et d'autre de la partie fixe 130.

Sur la figure 8, les positions rapprochée et éloignée de la lame 126 sont représentées, respectivement, en traits pleins et en traits pointillés. Dans ce mode de réalisation, dans la position rapprochée, la lame 126 s'étend principalement dans un plan horizontal et sous la totalité de la piste 50 de l'antenne 14. Dans la position éloignée, les parties mobiles 132, 134 se recroquevillent sur elles-mêmes dans une direction parallèle au plan du substrat 12. Par exemple, les parties mobiles 132, 134 se recroquevillent sur elles-mêmes en se pliant à la façon d'un accordéon. Dès lors, une fois que les parties mobiles 132, 134 se sont recroquevillées, la lame 126 n'est plus ou pratiquement plus située sous la piste 50. Dans ce mode de réalisation, la lame 126 passe de sa position rapprochée vers sa position éloignée en réponse au dépassement du seuil S_{T} par la température de la radio étiquette 120.

La figure 9 représente une radio étiquette 140 susceptible d'être utilisée à la place de la radio étiquette 6 dans l'ensemble 2. La radio étiquette 140 est identique à la radio étiquette 6 sauf que la lame 66 est remplacée par deux lames 142 et 144.

La lame 142 est identique à la lame 66 sauf qu'elle ne comporte qu'une seule partie fixe 146 ancrée dans la paroi verticale 63 du boîtier 58. L'extrémité 148 de la lame 142 opposée à sa partie fixe 146 est laissée libre de se déplacer à l'intérieur de la cavité 60. La partie mobile 150 de la lame 142 s'étend de la partie fixe 146 jusqu'à l'extrémité libre 148. L'extrémité 148 est par exemple située à la verticale de la partie centrale 52 de l'antenne 14. Les positions éloignée et rapprochée de la lame 142 sont représentées, respectivement, en traits pleins et en traits pointillés sur la figure 9. Dans la position éloignée, l'extrémité 148 est plus éloignée de la face inférieure du substrat 12 que dans la position rapprochée.

La lame 144 se déduit de la lame 142 par symétrie par rapport à un plan vertical passant par le centre de la puce 16 et parallèle à la paroi 63. Le fonctionnement de la radio étiquette 140 se déduit du fonctionnement de la radio étiquette 6.

La figure 10 représente une radio étiquette 160 susceptible d'être utilisée à la place de la radio étiquette 6 dans l'ensemble 2. La radio étiquette 160 est identique à la radio étiquette 6 sauf que la lame 66 est remplacée par une lame 162. La lame 162 est identique à la lame 66 sauf que ses bords transversaux 164 et 166 ne sont pas directement ancrés, sans aucun degré de liberté, dans les parois verticales 62 et 63. Ici, les bords transversaux 164, 166 sont mécaniquement raccordés aux parois verticales 63, 62, respectivement, par des brins 166 et 168. Le brin 166 a une extrémité ancrée dans la paroi 63 et une autre extrémité opposée fixée au bord transversal 164. Le brin 166 permet au bord 164 de pivoter autour du point d'ancrage de ce brin dans la paroi 63. Le brin 166 n'est pas réalisé dans un matériau transducteur. Par contre, il peut être ou ne pas être réalisé dans un matériau électriquement conducteur. Le brin 168 est le symétrique du brin 166 par rapport à un plan vertical passant par le centre de la puce 16 et parallèle à la paroi 63.

Sur la figure 10, les positions éloignée et rapprochée de la lame 162 sont représentées, respectivement, en traits pleins et en trait pointillés. Lorsque la température de la radio étiquette 160 dépasse le seuil ST, la lame 162 rétrécit brusquement dans sa direction longitudinale, ce qui provoque une traction simultanée sur les brins 166 et 168 et donc un déplacement vers le haut de la lame 162 qui se rapproche de la face inférieure du substrat 12.

La figure 11 représente une radio-étiquette 180 identique à la radio-étiquette 6 sauf que la lame 66 est remplacée par une lame 182. La lame 182 est identique à la lame 66 sauf qu'elle est réalisée en matériau magnétostrictif ou à mémoire de forme magnétique et non pas dans un matériau à mémoire de forme thermique.

Ici, par matériau magnétostrictif, on désigne un matériau dont la valeur absolue du coefficient de magnétostriction λₛ à saturation est supérieure 10 ppm (partie par million) et, de préférence, supérieur à 100 ou 1000 ppm. Le coefficient λₛ est défini par la relation suivante λₛ = ΔL/L, où ΔL est l'amplitude de la déformation du matériau magnétostrictif le long de la direction où sa déformation est maximale et L est la longueur de ce matériau dans cette direction en absence de champ magnétique. Par exemple, le matériau magnétostrictif est du Terfenol-D ou un alliage FeSiB ou un alliage FeCo. Dans ce cas, le coefficient de magnétostriction λₛ de ce matériau est strictement positif. Le matériau magnétostrictif peut également avoir un coefficient de magnétostriction λₛ négatif. Par exemple, dans ce cas, le matériau magnétostrictif est du SamFeNol qui est un alliage de samarium.

Un matériau à mémoire de forme magnétique est un matériau qui travaille comme décrit pour les matériaux à mémoire de forme thermique sauf que sa déformation est déclenchée par une variation du champ magnétique et non pas par une variation de température. Comme pour les matériaux à mémoire de forme thermique, le matériau à mémoire de forme magnétique présente un taux d'allongement supérieur à 1 % ou 2 %. Par exemple, il peut s'agir d'un alliage de NiMnGa.

La radio-étiquette 180 fonctionne comme la radio-étiquette 6 sauf que c'est une variation de l'amplitude du champ magnétique créée, par exemple, par un aimant, une bobine ou toute autre source de champ magnétique externe auquel est exposée la radio-étiquette 180 qui fait varier l'impédance de l'antenne 14.

De nombreux autres modes de réalisation sont possibles. Par exemple, la radio-étiquette peut comporter une batterie ou un système de récupération d'énergie additionnel et donc se comporter comme une radio-étiquette semi-passive ou active.

D'autres formes de l'antenne 14 sont possibles. Par exemple, l'antenne peut aussi être en forme de méandre. Dans ce cas, l'antenne s'étend le long d'un axe longitudinal de la face supérieure du substrat et comporte plusieurs brins disposés les uns après les autres le long de cet axe longitudinal. Chacun de ces brins formant un segment, par exemple rectiligne, qui coupe l'axe longitudinal en un seul point. Ces brins sont électriquement raccordés les uns aux autres par d'autres brins entièrement situés soit d'un seul côté de cet axe longitudinal. Une antenne conformée en méandre est par exemple représentée dans l'article A1. L'antenne peut aussi être conformée en « T » comme décrit dans l'article A1. On peut également utiliser des versions « fentes » de ces antennes, ces antennes se caractérisant alors par une absence de matériau (« fente ») localement dans le métal constituant l'antenne.

L'agencement de la puce 16 peut être différent. Par exemple, l'émetteur-récepteur 18 peut être intégré à l'intérieur du calculateur 20.

Dans un autre mode de réalisation, la charge électrique 102 est remplacée par une résistance. Elle peut aussi être remplacée par une simple liaison filaire. Dans ce cas, le lecteur 8 détecte la modification de l'inductance mutuelle entre l'antenne 32 et l'antenne 14 pour détecter si le seuil S_{T} de température a été franchi ou non.

De nombreux autres modes de réalisation de la lame sont possibles. Par exemple, plusieurs matériaux à mémoire de forme différents peuvent être utilisés pour réaliser différentes parties de la lame. Ces matériaux à mémoire de forme présentent alors chacun une température de transition différente des autres matériaux à mémoire de forme utilisés. Par exemple, une première partie de la lame est réalisée dans un premier matériau à mémoire de forme ayant une température de transition T₁ et une autre partie de la lame est réalisée dans un second matériau à mémoire de forme ayant une température de transition T₂ plus grande que la température T₁. Dans ces conditions, si la température de la lame est inférieure à la température T₁, cela correspond à une première position de la lame et donc à une première valeur de l'impédance de l'antenne. Si la température de la lame est comprise entre les températures T₁ et T₂, la lame se déforme pour atteindre une seconde position et donc une seconde valeur de l'impédance de l'antenne. Enfin, si la température de la lame dépasse la température T₂, la lame se déforme, par exemple encore plus, pour atteindre une troisième position dans laquelle l'antenne présente une troisième valeur d'inductance. Le lecteur 8 peut détecter quelle est la valeur de l'inductance actuelle de l'antenne et donc déterminer la plage de températures de l'antenne. Ainsi, l'utilisation de différents matériaux à mémoire de forme permet de détecter le franchissement de plusieurs seuils de température.

Dans un autre mode de réalisation, il est aussi possible d'utiliser plusieurs lames, chaque lame ayant une température de transition différente de celle des autres lames. On peut ainsi détecter le franchissement de plusieurs seuils de température différents. Par exemple, la lame 144 est réalisée dans un matériau à mémoire de forme ayant un température de transition différente de celle de la lame 142.

Dans une autre variante, la lame 66 est dans sa position rapprochée lorsque la température de la radio-étiquette est inférieure au seuil S_{T} et dans sa position éloignée lorsque la température de la radio-étiquette est supérieure à ce seuil S_{T}. Pour cela, la lame 66 est par exemple incurvée du côté opposé à celui représenté sur la figure 3. Dans ces conditions, le rétrécissement de la lame 66 lorsque sa température dépasse le seuil S_{T} amène la lame dans sa position éloignée.

La lame peut être conformée de manière à ce que la déformation entre les positions éloignée et rapprochée soit irréversible. A cet effet, on peut procéder comme décrit dans l'article A1.

La lame 66 n'a pas besoin d'être systématiquement rectangulaire. Par exemple, elle peut être carrée ou de forme elliptique ou de tout autre forme possible.

D'autres procédés de modulation peuvent être utilisés pour transmettre des données entre le lecteur et la radio-étiquette. Par exemple, l'antenne 14 est raccordée électriquement avec un condensateur variable pour former un circuit LC résonnant. L'émetteur-récepteur 18 modifie la valeur de ce condensateur en fonction de la valeur du bit ou du groupe de bits à transmettre. Cela modifie alors la valeur de la fréquence de résonance du circuit LC. Le lecteur détecte cette modification de la fréquence de résonance du circuit LC et en déduit la valeur du bit ou du groupe de bits transmis. Ce protocole de communication fonctionne particulièrement bien lorsque les antennes du lecteur et de la radio-étiquette sont couplées par induction magnétique. Ce protocole est donc généralement utilisé en champ proche, c'est-à-dire lorsque les antennes 14 et 32 sont séparées par une distance inférieure à λ/(2π), où :
- λ est la longueur d'onde de l'onde électromagnétique utilisée pour communiquer entre ces antennes, et
- π est le nombre Pi.

Dans une autre variante, c'est l'inductance de l'antenne qui est modifiée par l'émetteur-récepteur 18. Pour cela, l'émetteur-récepteur 18 commande un interrupteur électrique qui modifie l'inductance de l'antenne. Ces deux modes de réalisation sont par exemple décrits en détail à la page 21 de l'article suivant Youbok Lee : « Antenna Circuit Design for RFID applications », Microchip Technology INC, 2003, Note technique AN710.

La détection du franchissement du seuil ST peut aussi être détectée par le lecteur 8 simplement par le fait qu'il n'arrive pas à établir la liaison 30 avec la radio-étiquette alors que celle-ci est située à une distance où, en absence de modification de l'inductance de l'antenne, la liaison 30 aurait pu être établie. Par exemple, pour cela, la radio-étiquette est systématiquement placée au-delà d'une distance minimum entre le lecteur et la radio-étiquette et en deçà d'une distance maximum au-delà de laquelle le lecteur ne peut pas normalement établir la liaison 30 avec cette radio-étiquette. Dans ces conditions, lorsque la température est en dessous du seuil ST, le lecteur 8 arrive à établir la liaison 30 avec la radio-étiquette 6. Dans le cas contraire, c'est-à-dire si la température a dépassé le seuil S_{T}, le lecteur n'arrive pas à établir la liaison 30, ce qui lui indique que la température de la radio-étiquette 6 a franchi le seuil S_{T}. Dans ce mode de réalisation simplifié, il n'est pas nécessaire que le lecteur soit capable de choisir automatiquement la fréquence pour laquelle le taux de transfert τ est supérieur à la limite α. Typiquement, dans ce cas, la fréquence de lecture de la radio-étiquette est fixée une fois pour toute.

Tous les modes de réalisation et variantes précédemment décrits s'appliquent aussi au cas où le matériau transducteur utilisé est un matériau magnétostrictif ou à mémoire de forme magnétique.

## Revendications

1. Radio-étiquette (6,100,110,120,140,160,180) apte à indiquer à un lecteur (8), par l'intermédiaire d'une liaison sans-fil, qu'une grandeur physique a franchi un seuil prédéterminé, cette grandeur physique étant choisie dans le groupe composé d'une température de la radio-étiquette et d'un champ magnétique dans lequel est plongé la radio-étiquette, cette radio-étiquette comportant :
- un substrat (12) électriquement isolant,
- une antenne (14) pour établir la liaison sans-fil avec le lecteur, cette antenne étant entièrement déposée et fixée sans aucun degré de liberté sur le substrat isolant,
- un plan de masse flottant en matériau électriquement conducteur et électriquement isolé de l'antenne, ce plan de masse étant déplaçable par rapport à l'antenne entre une première position dans laquelle l'impédance de l'antenne est égale à une première valeur et une seconde position dans laquelle l'impédance de l'antenne est égale à une seconde valeur différente de la première valeur, et
- un actionneur réalisé dans un matériau transducteur apte à transformer une variation de la grandeur physique en un déplacement mécanique du plan de masse entre ses première et seconde positions lorsque cette variation conduit la grandeur physique à franchir le seuil prédéterminé pour indiquer au lecteur cet événement, le matériau transducteur étant choisi dans un groupe composé d'un matériau à mémoire de forme thermique, d'un matériau magnétostrictif et d'un matériau à mémoire de forme magnétique,
**caractérisée en ce que** :
- le matériau transducteur est également un matériau électriquement conducteur, et
- le plan de masse et l'actionneur sont tous les deux formés par une même lame (66 ; 112 ; 126 ; 142, 144 ; 162 ; 182) réalisée dans ce matériau transducteur et dont une partie mobile se déplace par rapport à l'antenne entre les première et seconde positions lorsque la grandeur physique franchit le seuil prédéterminé.

2. Radio-étiquette selon la revendication 1, dans laquelle la lame comporte une partie fixe (68, 70 ; 114 ; 130 ; 146) ancrée sans aucun degré de liberté au substrat.

3. Radio-étiquette selon l'une quelconque des revendications précédentes, dans laquelle :
- deux extrémités de l'antenne sont raccordées électriquement l'une à l'autre soit directement par l'intermédiaire d'une piste électrique soit par l'intermédiaire d'une charge électrique (102) pour former un circuit électrique fermé, et
- la radio-étiquette est dépourvue de puce électronique électriquement raccordée à ce circuit électrique fermé.

4. Radio-étiquette selon la revendication 3, dans laquelle les deux extrémités de l'antenne sont raccordées électriquement l'une à l'autre par l'intermédiaire d'un condensateur (102) pour former un circuit LC résonant dont la fréquence de résonance est fonction de l'inductance de l'antenne.

5. Radio-étiquette selon l'une quelconque des revendications précédentes, dans laquelle le matériau transducteur est un matériau à mémoire de forme thermique dont le taux d'allongement est supérieur à 1 % en réponse à une variation de température de 10°C autour du seuil prédéterminé.

6. Radio-étiquette selon l'une quelconque des revendications précédentes, dans laquelle la lame est agencée de manière à ce que le déplacement de sa partie mobile entre les première et seconde positions soit irréversible.

7. Radio-étiquette selon l'une quelconque des revendications précédentes, dans laquelle l'amplitude du débattement maximal (Aₘₐₓ) de la partie mobile de la lame entre ses première et seconde positions est supérieure à 1 mm.

8. Radio-étiquette selon l'une quelconque des revendications précédentes, dans laquelle la radio-étiquette est une radio-étiquette passive alimentée uniquement à partir de l'énergie des ondes électromagnétiques émises par le lecteur.

9. Ensemble comportant :
- une radio-étiquette (6 ; 100 ; 110 ; 120 ; 140 ; 160 ; 180) apte à indiquer à un lecteur, par l'intermédiaire d'une liaison sans-fil, qu'une grandeur physique a franchi un seuil prédéterminé, cette grandeur physique étant choisie dans le groupe composé d'une température de la radio-étiquette et d'un champ magnétique dans lequel est plongé la radio-étiquette, cette radio-étiquette comportant :
• un substrat (12) électriquement isolant,
• une antenne (14) pour établir la liaison sans-fil avec le lecteur, cette antenne étant entièrement déposée et fixée sans aucun degré de liberté sur le substrat isolant,
• un plan de masse flottant en matériau électriquement conducteur et électriquement isolé de l'antenne, ce plan de masse étant déplaçable par rapport à l'antenne entre une première position dans laquelle l'impédance de l'antenne est égale à une première valeur et une seconde position dans laquelle l'impédance de l'antenne est égale à une seconde valeur différente de la première valeur, et
• un actionneur réalisé dans un matériau transducteur apte à transformer une variation de la grandeur physique en un déplacement mécanique du plan de masse entre ses première et seconde positions lorsque cette variation conduit la grandeur physique à franchir le seuil prédéterminé de sorte que la plage de fréquences pour laquelle le taux de transfert d'énergie électrique entre le lecteur et la radio-étiquette est supérieur à une limite prédéterminée, varie en même temps d'une première plage vers une seconde plage en réponse au franchissement de ce seuil prédéterminé par la grandeur physique, ces première et seconde plages de fréquences n'ayant pas de fréquences commune, le matériau transducteur étant choisi dans un groupe composé d'un matériau à mémoire de forme thermique, d'un matériau magnétostrictif et d'un matériau à mémoire de forme magnétique, et
- le lecteur (8) apte à émettre une onde électromagnétique à une fréquence d'interrogation pour lire la radio-étiquette, ce lecteur étant apte à choisir automatiquement la fréquence d'interrogation à utiliser pour que le taux de transfert d'énergie électrique entre le lecteur et la radio-étiquette soit supérieur à la limite prédéterminée, ce lecteur comportant en plus une table (39) pré-enregistrée qui associe aux première et seconde plages de fréquences des indications, respectivement, de non franchissement et de franchissement du seuil prédéterminé, et le lecteur est apte à transmettre à un appareil externe l'indication qui est associée, par la table préenregistrée, à la fréquence d'interrogation choisie automatiquement et utilisée pour interroger la radio-étiquette,
**caractérisé en ce que** la radio-étiquette (6 ; 100 ; 110 ; 120 ; 140 ; 160 ; 180) est conforme à l'une quelconque des revendications précédentes.

## Patentansprüche

1. Funketikett (6, 100, 110, 120, 140, 160, 180), welches geeignet ist, einem Lesegerät (8) über eine drahtlose Verbindung anzuzeigen, dass eine physikalische Größe einen vorbestimmten Schwellenwert überschritten hat, wobei diese physikalische Größe aus der Gruppe ausgewählt ist, die aus einer Temperatur des Funketiketts und einem Magnetfeld, in welchem sich das Funketikett befindet, besteht, wobei dieses Funketikett aufweist:
- ein elektrisch isolierendes Substrat (12),
- eine Antenne (14) zum Herstellen einer drahtlosen Verbindung mit dem Lesegerät, wobei diese Antenne vollständig auf das isolierende Substrat aufgebracht und ohne Freiheitsgrad an ihm befestigt ist,
- eine schwimmend gelagerte Masseebene aus elektrisch leitfähigem Material, die von der Antenne elektrisch isoliert ist, wobei diese Masseebene in Bezug auf die Antenne verlagerbar ist zwischen einer ersten Position, in welcher die Impedanz der Antenne gleich einem ersten Wert ist, und einer zweiten Position, in welcher die Impedanz der Antenne gleich einem zweiten Wert ist, der vom ersten Wert verschieden ist, und
- einen aus einem Wandlermaterial hergestellten Aktuator, der geeignet ist, eine Änderung der physikalischen Größe in eine mechanische Verlagerung der Masseebene zwischen ihrer ersten und ihrer zweiten Position umzuwandeln, wenn diese Änderung dazu führt, dass die physikalische Größe den vorbestimmten Schwellenwert überschreitet, um dem Lesegerät dieses Ereignis anzuzeigen, wobei das Wandlermaterial aus einer Gruppe ausgewählt ist, die aus einem thermischen Formgedächtnismaterial, einem magnetostriktiven Material und einem magnetischen Formgedächtnismaterial besteht,
**dadurch gekennzeichnet, dass**:
- das Wandlermaterial auch ein elektrisch leitfähiges Material ist, und
- die Masseebene und der Aktuator alle beide von ein und demselben Plättchen (66; 112; 126; 142, 144; 162; 182) gebildet werden, das aus diesem Wandlermaterial hergestellt ist und von dem sich ein beweglicher Teil in Bezug auf die Antenne zwischen der ersten und der zweiten Position verlagert, wenn die physikalische Größe den vorbestimmten Schwellenwert überschreitet.

2. Funketikett nach Anspruch 1, wobei das Plättchen einen festen Teil (68, 70; 114; 130; 146) aufweist, der ohne Freiheitsgrad am Substrat verankert ist.

3. Funketikett nach einem der vorhergehenden Ansprüche, wobei:
- zwei Enden der Antenne entweder direkt über eine elektrische Leiterbahn miteinander verbunden sind, oder über eine elektrische Last (102), um einen geschlossenen Stromkreis zu bilden, und
- das Funketikett nicht mit einem Mikrochip versehen ist, der mit diesem geschlossenen Stromkreis elektrisch verbunden ist.

4. Funketikett nach Anspruch 3, wobei die zwei Enden der Antenne über einen Kondensator (102) elektrisch miteinander verbunden sind, um eine LC-Resonanzschaltung zu bilden, deren Resonanzfrequenz von der Induktivität der Antenne abhängt.

5. Funketikett nach einem der vorhergehenden Ansprüche, wobei das Wandlermaterial ein thermisches Formgedächtnismaterial ist, dessen Dehnungsrate in Reaktion auf eine Temperaturänderung von 10 °C in der Umgebung des vorbestimmten Schwellenwertes größer als 1 % ist.

6. Funketikett nach einem der vorhergehenden Ansprüche, wobei das Plättchen derart ausgebildet ist, dass die Verlagerung seines beweglichen Teils zwischen der ersten und der zweiten Position irreversibel ist.

7. Funketikett nach einem der vorhergehenden Ansprüche, wobei die Amplitude der maximalen Auslenkung (Aₘₐₓ) des beweglichen Teils des Plättchens zwischen seiner ersten und seiner zweiten Position größer als 1 mm ist.

8. Funketikett nach einem der vorhergehenden Ansprüche, wobei das Funketikett ein passives Funketikett ist, das ausschließlich von der Energie der elektromagnetischen Wellen gespeist wird, die von dem Lesegerät ausgesendet werden.

9. Anordnung, welche aufweist:
- ein Funketikett (6; 100; 110; 120; 140; 160; 180), das geeignet ist, einem Lesegerät über eine drahtlose Verbindung anzuzeigen, dass eine physikalische Größe einen vorbestimmten Schwellenwert überschritten hat, wobei diese physikalische Größe aus der Gruppe ausgewählt ist, die aus einer Temperatur des Funketiketts und einem Magnetfeld, in welchem sich das Funketikett befindet, besteht, wobei dieses Funketikett aufweist:
• ein elektrisch isolierendes Substrat (12),
• eine Antenne (14) zum Herstellen einer drahtlosen Verbindung mit dem Lesegerät, wobei diese Antenne vollständig auf das isolierende Substrat aufgebracht und ohne Freiheitsgrad an ihm befestigt ist,
• eine schwimmend gelagerte Masseebene aus elektrisch leitfähigem Material, die von der Antenne elektrisch isoliert ist, wobei diese Masseebene in Bezug auf die Antenne verlagerbar ist zwischen einer ersten Position, in welcher die Impedanz der Antenne gleich einem ersten Wert ist, und einer zweiten Position, in welcher die Impedanz der Antenne gleich einem zweiten Wert ist, der vom ersten Wert verschieden ist, und
• einen aus einem Wandlermaterial hergestellten Aktuator, der geeignet ist, eine Änderung der physikalischen Größe in eine mechanische Verlagerung der Masseebene zwischen ihrer ersten und ihrer zweiten Position umzuwandeln, wenn diese Änderung dazu führt, dass die physikalische Größe den vorbestimmten Schwellenwert überschreitet, derart, dass sich der Frequenzbereich, für welchen die Übertragungsrate von elektrischer Energie zwischen dem Lesegerät und dem Funketikett größer als ein vorbestimmter Grenzwert ist, in Reaktion auf die Überschreitung dieses vorbestimmten Schwellenwertes durch die physikalische Größe gleichzeitig von einem ersten Bereich zu einem zweiten Bereich ändert, wobei dieser erste und dieser zweite Frequenzbereich keine Frequenzen gemeinsam haben, wobei das Wandlermaterial aus einer Gruppe ausgewählt ist, die aus einem thermischen Formgedächtnismaterial, einem magnetostriktiven Material und einem magnetischen Formgedächtnismaterial besteht, und
- das Lesegerät (8), das geeignet ist, eine elektromagnetische Welle mit einer Abfragefrequenz zum Lesen des Funketiketts auszusenden, wobei dieses Lesegerät geeignet ist, die zu verwendende Abfragefrequenz automatisch so zu wählen, dass die Übertragungsrate von elektrischer Energie zwischen dem Lesegerät und dem Funketikett größer als der vorbestimmte Grenzwert ist, wobei dieses Lesegerät außerdem eine vorab aufgezeichnete Tabelle (39) aufweist, welche dem ersten und dem zweiten Frequenzbereich Angaben der Nichtüberschreitung bzw. der Überschreitung des vorbestimmten Schwellenwertes zuordnet, und das Lesegerät geeignet ist, die Angabe, welche durch die vorab aufgezeichnete Tabelle der automatisch gewählten und zum Abfragen des Funketiketts verwendeten Abfragefrequenz zugeordnet wird, zu einer externen Vorrichtung zu übertragen,
**dadurch gekennzeichnet, dass** das Funketikett (6; 100; 110; 120; 140; 160; 180) einem der vorhergehenden Ansprüche entspricht.

## Claims

1. Radio-frequency identification tag (6, 100, 110, 120, 140, 160, 180) adapted to indicate to a reader (8), via a wireless connection, that a physical quantity has reached a predetermined threshold, this physical quantity being selected from the group comprised of a temperature of the radio-frequency identification tag and a magnetic field in which the radio-frequency identification tag is immersed, this radio-frequency identification tag comprising:
- an electrically insulating substrate (12),
- an antenna (14) for establishing the wireless connection with the reader, this antenna being placed entirely on and secured to the insulating substrate without any degree of freedom,
- a floating ground plane made of an electrically conductive material and electrically insulated from the antenna, this ground plane being mobile relative to the antenna between a first position wherein the impedance of the antenna is equal to a first value and a second position wherein the impedance of the antenna is equal to a second value different from the first value, and
- an actuator made of a transducer material adapted to convert a variation in the physical quantity into a mechanical displacement of the ground plane between its first and second positions when this variation leads the physical quantity to cross the predetermined threshold to indicate this event to the reader, the transducer material being selected from a group consisting of a thermal shape-memory material, a magnetostrictive material and a magnetic shape-memory material,
**characterized in that**:
- the transducer material is also an electrically conductive material, and
- the ground plane and the actuator are both formed by a single strip (66; 112; 126; 142, 144; 162; 182) made of this transducer material and a mobile portion of which moves relative to the antenna between the first and second positions when the physical quantity crosses the predetermined threshold.

2. Radio-frequency identification tag according to Claim 1, wherein the strip comprises a fixed portion (68, 70; 114; 130; 146) anchored to the substrate without any degree of freedom.

3. Radio-frequency identification tag according to either one of the preceding claims, wherein:
- two ends of the antenna are electrically connected to each other either directly via an electrical track or via an electrical load (102) to form a closed electric circuit, and
- the radio-frequency identification tag has no electronic chip electrically connected to this closed electric circuit.

4. Radio-frequency identification tag according to Claim 3, wherein both ends of the antenna are electrically connected to one another via a capacitor (102) to form a resonant LC circuit whose resonance frequency is a function of the inductance of the antenna.

5. Radio-frequency identification tag according to any one of the preceding claims, wherein the transducer material is a thermal shape-memory whose elongation ratio is greater than 1% in response to a temperature variation of 10 °C around the predetermined threshold.

6. Radio-frequency identification tag according to any one of the preceding claims, wherein the strip is arranged so that the displacement of its mobile portion between the first and second positions is irreversible.

7. Radio-frequency identification tag according to any one of the preceding claims, wherein the amplitude of the maximum deflection (Aₘₐₓ) of the mobile portion of the strip between its first and second positions is greater than 1 mm.

8. Radio-frequency identification tag according to any one of the preceding claims, wherein the radio-frequency identification tag is a passive radio-frequency identification tag powered only from the energy of the electromagnetic waves emitted by the reader.

9. Assembly comprising:
- a radio-frequency identification tag (6; 100; 110; 120; 140; 160; 180) adapted to indicate to a reader, via a wireless connection, that a physical quantity has reached a predetermined threshold, this physical quantity being selected from the group comprised of a temperature of the radio-frequency identification tag and a magnetic field in which the radio-frequency identification tag is immersed, this radio-frequency identification tag comprising:
• an electrically insulating substrate (12),
• an antenna (14) for establishing the wireless connection with the reader, this antenna being placed entirely on and secured to the insulating substrate without any degree of freedom,
• a floating ground plane made of an electrically conductive material and electrically insulated from the antenna, this ground plane being mobile relative to the antenna between a first position wherein the impedance of the antenna is equal to a first value and a second position wherein the impedance of the antenna is equal to a second value different from the first value, and
• an actuator made of a transducer material adapted to transform a variation in the physical quantity into a mechanical displacement of the ground plane between its first and second positions when this variation leads the physical quantity to cross the predetermined threshold so that the frequency range for which the electrical energy transfer ratio between the reader and the radio-frequency identification tag is greater than a predetermined limit, varies at the same time from a first range to a second rage in response to the crossing of this predetermined threshold by the physical value, these first and second frequency ranges having no common frequency, the transducer material being selected from a group consisting of a thermal shape-memory material, a magnetostrictive material and a magnetic shape-memory material, and
- the reader (8) adapted to emit an electromagnetic wave at a polling frequency to read the radio-frequency identification tag, this reader being adapted to automatically select the polling frequency to be used so that the electrical energy transfer rate between the reader and the radio-frequency identification tag is greater than the predetermined limit, this reader further comprising a pre-recorded table (39) that combines the first and second frequency ranges of indications of non-crossing and crossing of the predetermined threshold, respectively, and the reader is adapted to transmit to an external device the indication that is associated, by the pre-registered table, with the polling frequency automatically selected and used to query the radio-frequency identification tag,
wherein the radio-frequency identification tag (6; 100; 110; 120; 140; 160; 180) is in compliance with any one of the preceding claims.
